# EUROPEAN PATENT APPLICATION

(11) **EP 4 147 580 A1**
(43) Date of publication of application: **15.03.2023**
(21) Application number: 21195836.8
(22) Date of filing: 09.09.2021
(51) Int. Cl.: A23K 10/35, A23K 10/37, A23K 40/00, B01J 8/24, F26B 3/08

(54) **A METHOD OF DRYING A FEED MATERIAL COMPRISING STARCH**

(71) Applicant: Perpetual Next B.V., 1033 SE Amsterdam (NL)
(72) Inventor: DEKKER, Martijn J., 9718 LR Groningen (NL); LAMEIRE, Dennis D.W., 7984 DL Nijeveen (NL)
(74) Representative: Wilson Gunn

(57) **Abstract**

A method of drying a feed material comprising starch using a fluidised bed dryer; the fluidised bed dryer having an operating temperature; and the starch having a glass transition temperature which is dependent on moisture content; the method comprising mixing the feed material with a dry material, having a lower moisture content than the feed material, to form a mixture having a moisture content and passing the mixture through the fluidised bed dryer to produce a dried starch material wherein the temperature of the mixture within the fluidised bed dryer remains less than the glass transition temperature of the starch throughout its passage through the dryer.

## Description

### Technical Field of the Invention

The present invention relates generally to the field of drying a process material to obtain a product material. In particular, but not exclusively, the invention concerns the drying of a feed material comprising starch to obtain a product with the starch in a useful form.

### Background to the Invention

The process drying of a material comprising starch is subject to a number of issues, sone of which are general issues faced in the drying of many types of material and some of which are particular to drying starch.

Batch drying is conventionally used for the drying of starch and starch-containing materials due to problems with agglomeration of starch and starch-containing materials at higher moisture contents. Dryers such as tray dryers or drum dryers are normally used as these can dry the starch and starch-containing materials in a bed.

If a decanting dryer is used, in which the water is pressed out to reduce the moisture content, this results in a significant loss of starch in the wastewater.

The temperature at which drying takes place, and the drying time, are also important to maintain the desirable structural characteristics of the starch, in starch and starch-containing materials. Prolonged drying times and/or use of high temperatures can destroy or disrupt the semicrystalline structure of the starch. These factors can also introduce the risk of changes in material properties, negatively impacting drying performance and material properties such as colour, brittleness/elasticity and average particle size.

There is therefore a need for a more efficient drying method which allows drying of the starch in a more efficient manner, whilst maintaining the desirable material properties of the feed starch and/or starch-containing material(s).

One particular problem which aspects of this invention seek to address is to provide an improved method of drying potato starch to reduce the moisture content such that it can be used as an animal feed. For example, it is considered desirable to reduce the moisture content of potato residues, which can be as high as about 80-90%.

Embodiments of the invention seek to at least partially overcome or ameliorate any one or more of the abovementioned disadvantages or provide the consumer with a useful or commercial choice.

### Summary of the Invention

A broad aspect of the invention provides a method of drying a feed material comprising starch using a fluidised bed dryer; the method comprising:
a. mixing the feed material with a dry material, having a lower moisture content than the feed material, to form a mixture having a moisture content; and
b. passing the mixture through the fluidised bed dryer to produce a dried starch material.

The fluidised bed dryer may be a continuous fluidised bed dryer.

The moisture content of the mixture may be sufficient to allow fluidisation of the mixture in the fluidised bed dryer.

The mixture to be dried within the dryer will have a temperature within the dryer, which is related to the operating temperature of the fluidised bed dryer. The mixture may have a temperature which varies due to a location of the mixture in the dryer. The temperature of the mixture within the dryer will normally be below the operating temperature of the dryer. The temperature of the mixture within the fluidised bed dryer may remain less than the glass transition temperature of the starch throughout its passage through the dryer.

According to a first aspect of the invention there is provided a method of drying a feed material comprising starch using a fluidised bed dryer; the fluidised bed dryer having an operating temperature; and the starch having a glass transition temperature which is dependent on moisture content; the method comprising:
a. mixing the feed material with a dry material, having a lower moisture content than the feed material, to form a mixture having a moisture content; and
b. passing the mixture through the fluidised bed dryer
c. to produce a dried starch material
wherein the temperature of the mixture within the fluidised bed dryer remains less than the glass transition temperature of the starch throughout its passage through the dryer.

As such, the invention provides a method in which the feed material comprising starch is mixed with a dry material to achieve a predetermined moisture content. The predetermined moisture content is set in accordance with the temperature that the mixture will be at in the dryer. In particular, the predetermined moisture content of the mixture is set such that the mixture will not reach the glass transition temperature of the starch as it passes through the fluidised bed dryer (at any point). Of course, the moisture content of the mixture will reduce as it passes through the dryer, so the glass transition temperature will increase; thus, in the method, the temperature of the mixture can increase as it passes through the fluidised bed dryer, but such that at its moisture content at any point in the dryer, its temperature at that point is less than its glass transition temperature, throughout its passage through the dryer. Because the glass transition temperature of starch is dependent on moisture content, this prevents the feed material going into a glassy, then gelatinized phase in the dryer, which glassy and/or gelatinized phase is an undesirable product and/or can damage the dryer. Use of the method also allows drying to be accomplished in the fluidised bed dryer without requiring a mechanical water separation step, even though the feed material has a moisture content which may be as high as 90% (or higher).

Notably, and counterintuitively, whilst those skilled in the art might expect to have to reduce the moisture content from say 80-90% in the feed material to say 25-35% or less before feeding it to a fluidised bed dryer, the moisture content of the mixture will typically be well below that level before it is passed through the dryer, in order that the moisture content of the mixture at the temperature of the mixture within the fluidised bed dryer, is less than the moisture content corresponding to the glass transition temperature of the starch. For example, at typical dryer temperatures, the predetermined moisture content for potato starch may need to be 15% or less to remain below the glass transition temperature, i.e. substantially below the moisture content that might be expected for a feed to a fluidised bed dryer.

The target moisture content upon exiting the dryer may be 5-8 %.

According to a second aspect of the invention, there is provided a method of drying a feed material comprising starch using a continuous fluidised bed dryer; the method comprising:
a. mixing the feed material with a dry material, having a lower moisture content than the feed material, to form a mixture having a moisture content to allow fluidisation of the mixture in the fluidised bed dryer; and
b. passing the mixture through the fluidised bed dryer to produce a dried starch material.

According to a third aspect of the invention there is provided a method of producing animal feed comprising drying a feed material comprising starch according to the method of any of the preceding aspects of the invention optionally including any optional features.

The following optional features apply to any of the aspects set out above.

The method of drying feed material comprising starch may be used to dry starch or starch-containing material or items. The feed material will typically be a particulate material. The feed material of an embodiment may be organic material including, but not limited to food residue, potato material or potato starch.

In circumstances where the feed material is food residue, the food residue may be provided in cooked (or previously heated) or raw form. Whilst not wishing to be limited by theory, cooking or heating a material which contains starch, may have an effect on the starch, beginning breakdown of starch, which is sometimes referred to as "developed" starch. The glass transition temperature of this "developed" starch may be lower than that of native (uncooked) starch for any given moisture content.

One or more process parameters of the fluidised bed dryer may be changed for cooked or previously heated starch or starch-containing material as compared to uncooked starch or starch-containing material in order to account for the difference between the uncooked or previously heated starch and 'native' starch.

The method may be practised using a fluidised bed dryer. The fluidised bed dryer may be a continuous dryer with material entering the dryer and exiting the dryer on a continuous basis. The fluidised bed dryer may include mechanical agitation to assist or enhance fluidisation of the material to be dried.

Any type of fluidised bed dryer may be used. For example, the dryer may have a separate but associated cooler. Alternatively, or additionally, the fluidised bed dryer may have a cooling stage integral in the fluidised bed dryer. In a fluidised bed dryer with integrated cooling stage, the product may be dried using heated air the first portion of the fluidised bed dryer and then cooled down in a second portion of the fluidised bed dryer before leaving the dryer.

The fluidised bed dryer will normally have an operating temperature. The operating temperature will normally be the temperature in the drying portion (not including the cooling portion if provided). The operating temperature may be defined as the temperature of the heating source, e.g. hot air (or other gas) supplied to the dryer.

The operating temperature may be between 100°C and 200°C, for example between 125°C and 160°C, e.g. about 150°C. The operating temperature in the dryer may be set for the particular type of material entering the dryer, and one or more other parameters such as the moisture content of the material entering the dryer, the residence time in the dryer, the airspeed within the dryer and/or the desired moisture content of any product.

As mentioned above, the material to be dried within the dryer will have a material temperature within the dryer, which is related to the operating temperature of the fluidised bed dryer. In other words, the material to be dried may be at ambient temperature at the entry to the dryer and increase in temperature until a steady-state temperature is reached at which moisture is lost from the material without the temperature of the material changing. Further drying in the dryer may eventually lead to a point at which the material the temperature of the material will start to rise.

The temperature of the material in the dryer may remain constant during the period of evaporation of surface moisture. After the surface moisture has evaporated, the rate of evaporation may drop off and the temperature of the material in the dryer starts to rise. Normally the desired moisture content of the material lies in the latter zone, where there is a relationship between the desired moisture content and the product temperature.

Depending on the material in the dryer to be dried, the desired moisture content may lie in either the constant temperature phase, the rising product temperature phase or the constant temperature phase may be short or virtually non-existent.

The type of starch can have an impact on the drying curve, i.e. drying raw starch has a clear constant drying temperature phase, while in cooked/treated starch this phase is very short and may not be visible in practice as the cooked/treated starch enters the rising temperature phase almost immediately once the mixed product enters the fluid bed dryer.

The material will preferably be removed from the dryer before the temperature of the material at the moisture content of the now-dried material, rises to the glass transition temperature of the starch at the moisture content of the now-dried material. The mixture is preferably formed such that the target moisture content of the mixture is determined relative to the steady state temperature of the material in the dryer.

The fluidised bed dryer may incorporate a mechanical motion. The fluidised bed dryer will normally have an airspeed of the heated air within the dryer. Of all of the operating parameters of the dryer, the operating temperature is considered the most important to affect drying of the material entering the dryer to obtain a dried product of a given moisture content but also to maintaining the structure and/or material characteristics of the product. This is provided that the air distribution for fluidization is optimal. Non-optimal fluidization of the product may create dead spots in the bed where material temperature may become higher than the glass transition temperature, even though the average fluid bed temperature is below the glass transition temperature.

Operating parameters of the dryer may be adjusted to account for the predetermined moisture content in the mixture entering the dryer and the target moisture content in the product exiting the dryer. The operating parameters will normally be adjusted in real time to account for any changes in the operating characteristics of the dryer to obtain a desired product. Thus, those skilled in the art can adjust operating temperature in accordance with the moisture content of the mixture that is passed through the fluidised bed dryer or adjust the moisture content of the mixture (by varying the ratio of the dry material to the feed material) in accordance with the operating temperature of the dryer.

The initial moisture content of the feed material is typically high, for example, the moisture content of the feed material may be above 50%, for example above 80% and optionally as high as 88 to 90% or higher.

The feed material may be provided at any flow rate. The flow rate of the feed material will typically be adjusted dependent on one or more other drying parameters. In some embodiments, the flow rate of the feed material is greater than 600 kg per hour, for example approximately 900 kg per hour.

In some embodiments, the feed material may be provided in bulk storage. The feed material may be provided as a slurry. The feed material is preferably provided to a mixer to be mixed with the dry material with a lower moisture content than the feed material in order to form a mixture.

The method preferably includes the step of mixing the feed material with a dry material having a lower moisture content than the feed material to form a mixture having a (predetermined) moisture content. Preferably, the mixture is formed before the material enters the dryer. The mixture may be fed to the fluidised bed dryer directly from the mixer. Any apparatus may be used to form the mixture. For example, a low shear mixer may be used, a high shear mixer may be used, or mixed shear mixer could be used. In a preferred embodiment, a plough shear mixer is used. The type of mixer used will normally be dependent upon the parameters of the feed material and/or the parameters of the dry material. The mixer will preferably form a substantially homogeneous mixture with a moisture content lower than that of the feed material.

Normally, the mixer will be provided to form the mixture to a predetermined moisture content in accordance with the temperature of the starch in the dryer. Specifically, the moisture content is determined such that the starch does not reach its glass transition temperature in the fluidised bed dryer. As mentioned above, the temperature of the starch within the fluidised bed dryer will be dependent on the operating temperature of the dryer (and the moisture content of the starch). A controller may be provided operatively associated with the mixer to control the mixer to form the mixture to a predetermined moisture content based on the operating temperature of the dryer, the temperature of the starch within the dryer, the predetermined moisture content of the mixture at the entry to the dryer and/or the type of feed material.

Any dry material could be used in the mixture. The dry material may be different to the feed material. For example, chalk or similar "filler" material with a low moisture content may be used as the dry material. However, unless the different material is also suitable for the use of the dried starch material using a dry material which is different to the feed material may mean that separation is required after drying in order to separate the dry material from the dried feed material.

The dry material may be the same as the feed material but with a lower moisture content. Where the dry material is the same material as the feed material, the dry material may have any source. Preferably, dried product from the fluidised bed dryer could be used (i.e. preferably the dried starch is recycled and mixed with the feed material to form the mixture). The dry product may be collected after exiting the dryer, in a hopper or similar piece of equipment and a portion of the dried product removed as the output from the process with a portion of the dried product reused to add to the feed material as the dry material. Re-use of the dried product from the fluidised bed dryer may be preferred because the dried product will typically be dried to the target moisture content and therefore, the moisture content of the dried product from the fluidised bed dryer is known.

The moisture content of the dry material may be less than 15%, more particularly it may be less than 10% and more particularly still, it may be less than 8%, for example 6% or less. More broadly speaking, the predetermined moisture content of the mixture may be less than 15%, 14%, 13%, 12%, 11%, 10%, 9%, 8%, 7%, 6%, 5%, 4%, 3%, 2% or 1%.

The moisture content of the mixture at entry to the fluidised bed dryer may be below the moisture content corresponding to the glass transition temperature of the starch, at the temperature of the starch at the entry of the dryer. The mixture within the fluidised bed dryer may have a temperature profile with a temperature that varies at different points in the fluidised bed dryer, from the entry to the exit. As the mixture entering the dryer is typically below the operating temperature of the fluidised bed dryer, the temperature of the mixture at the entry of the fluidised bed dryer is typically lower than the operating temperature of the fluidised bed dryer. The temperature of the mixture will then normally increase as the mixture moves through the fluidised bed dryer. As the mixture moves through the fluidised bed dryer, the mixture becomes dryer (the moisture content decreases) which means that the glass transition temperature of the starch (at that moisture content), will typically increase. The temperature profile and/or operating temperature set point of the dryer may be adjusted in real time.

The predetermined moisture content of the mixture is preferably less than 15%, or less than 12% for example between 8% and 15% or between 9% and 12%.

The predetermined moisture content of the mixture will be determined based on the operating temperature of the dryer, the temperature of the starch within the dryer, the predetermined moisture content of the mixture at the entry to the dryer and/or the type of feed material. For example, if the operating temperature of the dryer is higher, then the temperature of the mixture within the dryer may also be higher, and the predetermined moisture content of the mixture may then be lower in order that the temperature of the mixture remain below the glass transition temperature of the starch.

The upper end of the moisture content range is the key to ensuring that the drying is effective, avoiding the mixture reaching the glass transition temperature of the starch and thus the maximum moisture content may be determined by those skilled in the art based on the contents of the feed material containing starch. As such, in one particular embodiment, the feed material containing starch comprises or consists of native potato starch residue and the predetermined moisture content of the mixture (that is provided to the dryer) is less than 15%. (Obviously moisture content will decrease from that predetermined level as the mixture is dried.) In another particular embodiment, the feed material containing starch comprises or consists of cooked or previously heated potato residues and the predetermined moisture content is less than 12%. More broadly speaking, the predetermined moisture content of the mixture may be less than 20%, 19%, 18%, 17%, 16%, 15%, 14%, 13%, 12%, 11%, 10%, 9%, 8%, 7%, 6% or 5%.

Normally, the lower end of the moisture content range of the mixture is a commercial consideration or limit. That is to say, the lower the moisture range of the mixture, the more dry material is necessary to add to the feed material, thus the less high-moisture content feed material can pass through the dryer in a given time and the more time and heat is wasted in the drying process.

The step of passing the mixture through the fluidised bed dryer may be achieved in the normal manner with mechanical agitation and/or airflow being adjustable parameters in relation to the fluidised bed dryer. Operation of the fluidised bed dryer may be automatically controlled to ensure that the moisture content of the material within the dryer remains below the moisture content corresponding to the glass transition temperature of the starch throughout its passage through the dryer.

Preferably, once the mixture has been dried to a desired target moisture content for the product, the now dried mixture may be cooled in an integrated cooling section within the fluidised bed dryer.

The method includes the step of producing dried starch material. The dried starch material may be part of a mixture which may include dry material other than starch or starch-containing material.

The dried starch material is typically the product which, as discussed above, may be removed as an output and/or reused as a dry material in order to mix with the feed material. Preferably some of the dried starch material is removed as an output and some is reused as the dry material.

In a fourth aspect the invention provides a controller operable to control a drying process in which a feed material comprising starch is dried in a fluidised bed dryer; the fluidised bed dryer having an operating temperature; and the starch having a glass transition temperature which is dependent on moisture content; the controller operable to control the mixing of the feed material with a dry material, having a lower moisture content than the feed material, to form a mixture having a predetermined moisture content; wherein the mixing is controlled such that the predetermined moisture content is set in accordance with the temperature of the mixture within the fluidised bed dryer, such that the temperature of the mixture within the fluidised bed dryer remains less than the glass transition temperature of the starch throughout its passage through the dryer.

The temperature of the material within the dryer may be dependent on the operating temperature of the dryer. The controller may control the mixer to form the mixture such that the predetermined moisture content is determined relative to a steady state temperature of the material in the dryer. The controller may control the amount of wet and/or dry material flow into the mixer to form the mixture such that the predetermined moisture content is less than the moisture content corresponding to the glass transition temperature of the starch at the steady state temperature of the material in the dryer. That is to say, the controller may control the amount of wet and/or dry material flow into the mixer to form the mixture such that the predetermined moisture content maintains the steady state temperature of the mixture below the glass transition temperature of the starch.

Of course, the controller may be operable to control a process according to any of the preceding aspects, optionally including any optional features or combination thereof.

A controller may be provided operatively associated with the mixer based on the operating temperature of the dryer, the temperature of the mixture within the dryer, the predetermined moisture content of the mixture at the entry to the dryer and/or the type of feed material.

In a fifth aspect, the invention resides in a drying system to dry a feed material comprising starch, the system comprising:
a mixer to form a mixture from the feed material and a dry material having a lower moisture content than the feed material; and
a fluidised bed dryer for drying the mixture to form a dried product.

The system may be operable to carry out the process of the broad aspect of the invention or any of the first to third aspects, optionally including any optional features or combination thereof.

The mixer may mix the feed material with the dry material to form a mixture having a predetermined moisture content. The system may be operable to ensure that the moisture content of the mixture at the temperature of the material throughout the fluidised bed dryer remains lower than the moisture content corresponding to the glass transition temperature of the material. As such, the mixing may be based on the temperature of the material within the fluidised bed dryer.

The system may comprise a return pathway for a portion of the dried product to be used as the dry material in the mixture.

A balancing unit may be provided for the dried product exiting the fluidised bed dryer. A first portion of dried product may be removed from the balancing unit as an output and a second portion of dried product may be removed from the balancing unit for use as the dry material fed to the mixer.

### Detailed Description of the Invention

In order that the invention may be more clearly understood one or more embodiments thereof will now be described, by way of example only, with reference to the accompanying drawings, of which:
- Figure 1: is a process flow diagram of a process for drying material according to an embodiment.
- Figure 2: is a graph showing the relationships between moisture content and glass transition temperature for starch in native and pregelatinized forms determined experimentally.
- Figure 3: is a graphical illustration of a temperature profile of a material within a fluidised bed dryer relative to the temperature of a heating source for the fluidised bed dryer.
- Figure 4: is a graphical illustration of % of fan usage over time within a fluidised bed dryer showing a process that stabilises (a stable process) and an unstable process in which the material agglomerates.

With reference to the accompanying figures, a process for drying material comprising starch is disclosed.

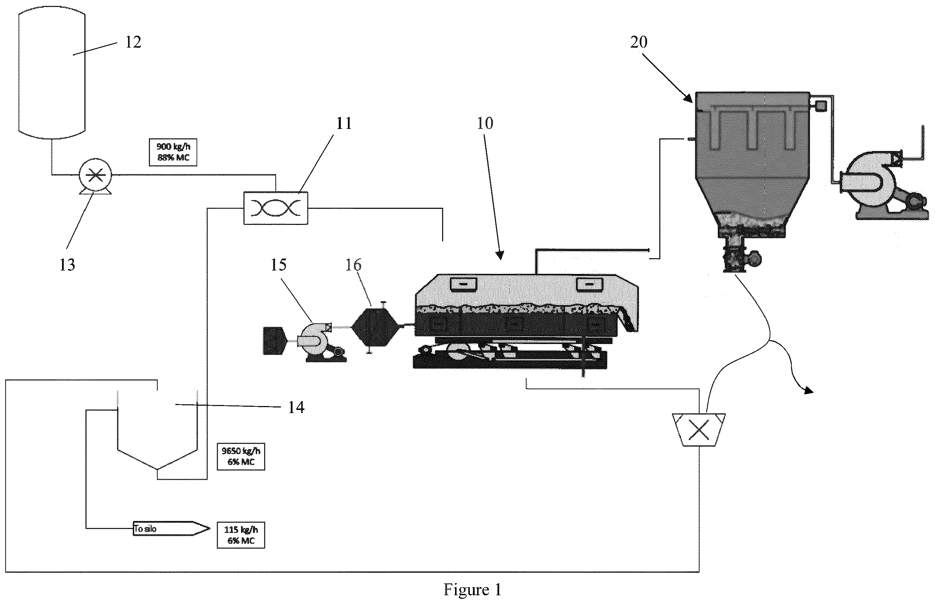

The process illustrated schematically in Figure 1 is an embodiment of a method of drying a feed material comprising starch using a fluidised bed dryer 10. A suitable fluidised bed dryer is a fluid bed dryer/cooler available from Ventilex BV of Heerde, Netherlands.

In the embodiment illustrated in Figure 1, the process includes a mixer 11 for mixing the feed material with a dry material which has a lower moisture content than the feed material to form a mixture having a predetermined moisture content. A suitable mixer is the ploughshare mixer KM 2000 D available from GEBRÜDER LODIGE MASCHINENBAU GMBH.

The mixture is then passed through the fluidised bed dryer 10 to produce a dried starch material.

The fluidised bed dryer has an operating temperature. Although the operating temperature of the dryer may be adjusted, the operating temperature will normally be relatively fixed during the drying process within the dryer. The (relatively fixed) operating temperature of the dryer 10 will cause the mixture to have an identifiable temperature profile within the dryer 10. The starch has a glass transition temperature which is dependent on the moisture content of the mixture to be dried.

In the exemplary embodiment, the moisture content of the mixture is predetermined such that the temperature of the mixture at any point within the dryer 10, will remain below the glass transition temperature of the starch, at all times while the mixture is in the dryer. The predetermined moisture content of the mixer at the entry to the dryer can be controlled appropriately, because the (relatively fixed) operating temperature of the dryer 10 will cause the mixture to have an identifiable temperature profile within the dryer 10.

Figure 1 shows a storage vessel 12 containing a feed material associated with a pump 13 or similar unit to convey the feed material from the storage vessel to the mixer 11.

The feed material will typically be a particulate feed material with a moisture content. As illustrated in Figure 1, the feed material is a slurry of potato material with a moisture content of approximately 88% (by weight).

In circumstances where the feed material is food residue, the food residue may be provided in cooked (or previously heated) or raw form. Whilst not wishing to be limited by theory, cooking or heating a material which contains starch, may have an effect on the starch, beginning breakdown of starch, so that the starch contained in a cooked or heated material is sometimes referred to as 'developed' or 'pregelatinized' starch (in contrast to 'native' starch contained in uncooked food residue).

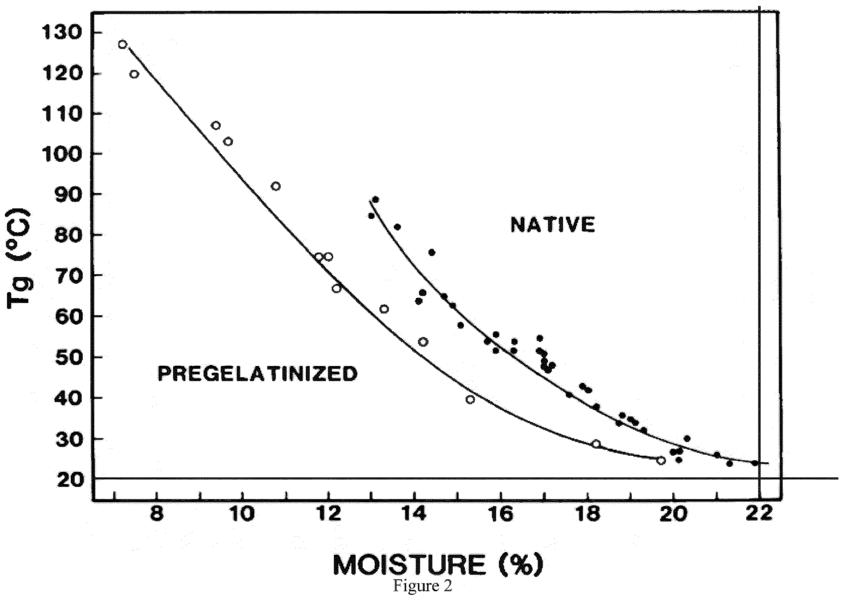

As can be seen from Figure 2, the form in which the starch is present, has an effect on the relationship between the glass transition temperature of the starch at a given moisture content. Figure 2 shows that glass transition temperature of native starch and that of pregelatinized starch have similar behaviours. The glass transition temperature of pregelatinized starch is however, lower at the same moisture content than the glass transition temperature of native starch. For example, at or around a moisture content of 15%, the glass transition temperature of native starch is approximately 60°C whereas at the same moisture content (15%), the glass transition temperature of pregelatinized starch is approximately 45-48°C.

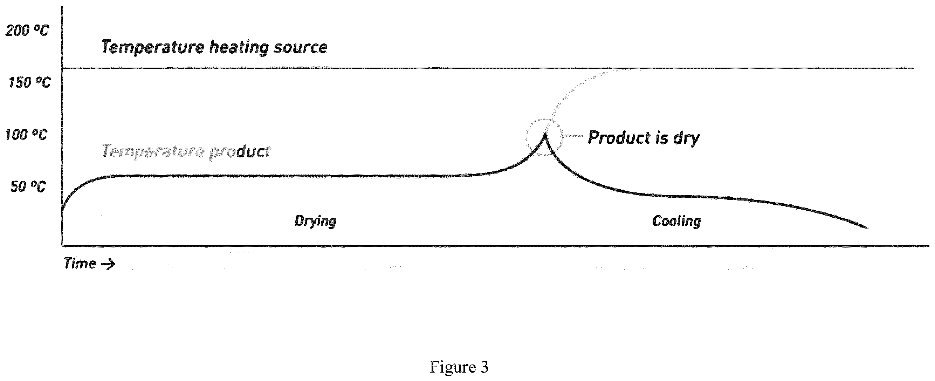

As shown in Figure 2, the glass transition temperature of pregelatinized starch at a moisture content of approximately 8% is approximately 120°C (which may be below the temperature of the heating source) whereas the glass transition temperature of native starch at a moisture content of approximately 8% should be in excess of 200°C (which is above the temperature of the heating source shown in Figure 3).

An example of the temperature profile of a mixture within a fluidised bed dryer relative to the temperature of a heating source for the fluidised bed dryer is illustrated in Figure 3. This Figure shows that the temperature profile of the mixture is at or around ambient temperature at the entry to the dryer, but them climbs to a steady state temperature, which is well below the operating temperature of the dryer (in the specific example, the steady state temperature of the mixture is around 60°C when the operating temperature is around 160°C). Without wishing to be limited by theory, the steady state temperature of the mixture may be the temperature at which the product is losing moisture, without the temperature of the mixture rising. When the mixture has lost sufficient moisture, the heat added by the dryer will start to increase the temperature of the mixture toward the temperature of the heating source.

The mixture may be subjected to a cooling phase at this stage. By this point in the dryer, the moisture content of the mixture may be within the target moisture content range of between 5-8 %. Cooler air may be used for the cooling stage, such as air at ambient temperature. Cooling may prevent moisture condensation due to hot wet air trapped between the particles of the mixture.

Also of note in Figure 3, is the region of increasing temperature after entry to the dryer. The moisture content of the mixture fed into the dryer will preferably be sufficiently low, that the temperature of the mixture fed to the dryer is and remains below the glass transition temperature of the starch during the drying process within the dryer. Once the mixture starts to lose moisture by drying within the dryer, the temperature of the mixture may rise toward the operating temperature of the dryer unless the mixture is removed from the dryer.

If the temperature of the mixture fed to the dryer increases significantly after entry to the dryer, without losing moisture, for example, if it is heated too quickly or the operating temperature of the dryer is too high, then the temperature of the mixture could rise above the glass transition temperature of the material, and this should be avoided. Selection of a moisture content of the mixture at the entry to the dryer is important to ensure that this initial increase in temperature (before significant loss of moisture) is accounted for, so that the temperature of the mixture remains below the glass transition temperature of the starch.

The operating parameters of the fluidised bed dryer 10 (and ancillary equipment such as the mixer 11) will therefore usually be optimised according to the form of the starch to be dried.

A balancing hopper 15 containing a dry material provides the dry material to the mixer as required.

The fluidised bed dryer 10 of the illustrated embodiment is a continuous dryer with a mixture to be dried entering the dryer 10 from the mixer 11, and dried material exiting the dryer 10, on a continuous basis.

The illustrated fluidised bed dryer 10 has a cooling stage integral in the fluidised bed dryer 10. In this type of fluidised bed dryer 10, the mixture is dried using heated air the first portion of the fluidised bed dryer, and then cooled down in a second portion of the fluidised bed dryer 10 before leaving the dryer. The heated air is typically provided by a fan 15 associated with a heat exchanger 16 to achieve the required air temperature (the operating temperature) within the dryer 10.

A finisher/mill 20 is illustrated in Figure 1 at the outlet of the fluid bed dryer. The finisher/mill 20 can receive dried product separately from the dryer (or alternatively a portion of the dried product may be removed from a single exit stream) for finishing and/or size reduction. The finished/milled product may be used in the return stream and/or a portion may be removed after finishing/milling for use elsewhere.

The operating temperature of the fluidised bed dryer 10 will normally be that in the drying portion (not including the cooling portion, if provided). The operating temperature will typically be between 125°C and 160°C. The operating temperature in the dryer 10 is typically set for the particular type of material entering the dryer 10, and one or more other parameters such as the moisture content of the material entering the dryer, the residence time in the dryer, the airspeed within the dryer and/or the desired moisture content of any product.

The fluidised bed dryer 10 used may incorporate a mechanical motion. The fluidised bed dryer 10 will normally have an airspeed of the heated air within the dryer. Of all of the operating parameters of the dryer, the operating temperature is typically the most important to dry of the mixture entering the dryer 10 to obtain a dried product of a given moisture content, but also to maintain the structure and/or material characteristics of the product.

Operating parameters of the dryer may be adjusted to account for the moisture content in the mixture entering the dryer and/or the target moisture content in the product exiting the dryer. The operating parameters will normally be adjusted in real time to account for any changes in the operating characteristics of the dryer 10 to obtain a desired product.

The feed material may be provided at any flow rate. The flow rate of the feed material will typically be adjusted dependent on one or more other drying parameters. In the illustrated embodiment, the flow rate of the feed material is approximately 900 kg per hour at 88% moisture content.

As shown, mixing the feed material with a dry material having a lower moisture content than the feed material to form a mixture having a moisture content is undertaken in the mixer 11 before the mixture enters the dryer 10.

Any type of mixer 11 may be used to form the mixture. In one embodiment, a plough shear mixer is used. The type of mixer used will normally be dependent upon the parameters of the feed material and/or the parameters of the dry material. The mixer 11 typically forms a substantially homogeneous mixture with a moisture content lower than that of the feed material.

Normally, the mixer 11 will be provided to mix to a predetermined moisture content. At the predetermined moisture content, the temperature of the mixture will remain lower than the glass transition temperature of the starch, at the operating temperature of the dryer. A control mechanism or system will normally be associated with the mixer 11 to control the predetermined moisture content of the mixture based on the operating temperature of the dryer 10, and the type of feed material.

Any dry material could be used in the mixture. The dry material may be different to the feed material. For example, chalk or similar material with a low moisture content may be used as the dry material. However, using a dry material which is different to the feed material may mean that separation is required after drying in order to separate the dry material from the dried feed material.

In the illustrated embodiment, the dry material used, is the dried product from the outlet of the fluidised bed dryer 10. As shown in Figure 1, the dried product can be collected after exiting the dryer 10, in a balancing hopper 14 or similar piece of equipment, and a portion of the dried product removed as the output from the process to a storage silo or similar, with a portion of the dried product reused as the dry material to be provide to the mixer 11.

Re-use of the dried product from the fluidised bed dryer 10 may be preferred because the dried product will typically be dried to the predetermined moisture content and therefore, the moisture content of the dried product from the fluidised bed dryer is known. Re-use of the dried product also means that separation of different materials is not required.

The moisture content of the dry material (i.e. the dried product in this embodiment) is typically less than 15%, more particularly less than 10% and more particularly still, less than 8%. In this particular embodiment it is 6%.

The predetermined moisture content of the mixture at entry to the fluidised bed dryer 10 is controlled so that the temperature of the mixture within the dryer 10, remains below the glass transition temperature of the starch, at the temperature it reaches in the dryer 10, particularly at the entry end (where its moisture content is highest).

Usually, the mixture drying in the fluidised bed dryer 10 has a temperature profile over the length of the dryer 10, with the temperature of the mixture varying at different points in the fluidised bed dryer 10 from the entry to the exit. The mixture entering the dryer 10 is typically below the operating temperature of the fluidised bed dryer 10, with the temperature of the mixture then increasing as the mixture moves through the fluidised bed dryer 10 (and normally always remaining below the operating temperature of the dryer 10).

As the mixture moves through the fluidised bed dryer 10, the mixture becomes drier (the moisture content decreases), which means that the glass transition temperature of the starch will typically increase, as seen from Figure 2. The temperature profile and/or operating temperature set point of the dryer may be adjusted in real time.

The moisture content of the mixture will typically be less than 15%, e.g. between 8% and 15% or between 9% and 12%, such as 10%. Normally, the lower end of the target moisture content range of the mixture is a commercial consideration or limit. As mentioned above, the predetermined moisture content of the mixture may differ depending upon the form of the starch in the mixture to be dried.

Operation of the fluidised bed dryer 10 is typically controlled to ensure that the moisture content of the mixture is selected so that the temperature of the mixture within the dryer 10 is below the glass transition temperature of the starch throughout its passage through the dryer 10.

Usually, once the mixture has been dried to a target moisture content, the now dried mixture may be cooled in an integrated cooling section within the fluidised bed dryer 10.

The dried starch material is typically the product which, as discussed above, may be removed as an output and/or reused as the dry material to mix with the feed material to achieve the desired mixture at entry to the fluidised bed dryer 10.

### Illustrative Example 1

As illustrated in Figure 1, approximately 900kg/hour of feed material (a slurry of potato material) with a moisture content of approximately 88% (by weight) is fed to mixer 11.

The fee material is mixed with dried product with a moisture content of approximately 6% from the dryer. In this example, 9650kg/hour of dried product (6%MC) is mixed with 900kh/hour of feed material (88%MC) to achieve a mixture to be fed to the dryer of approximately 15%MC.

This allows the dryer, using heated air at a temperature of between 130°C and 160°C to dry the mixture to 6%MC without the temperature of the mixture exceeding the glass transition temperature of the starch whilst in the dryer.

An amount of dried product (6%MC) can be removed as a product for storage or sale, at a rate of approximately 115kg/hour.

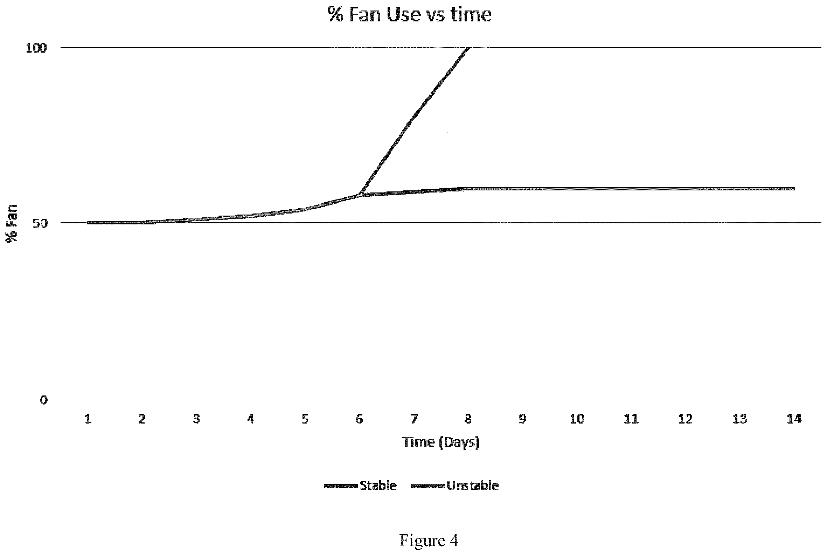

At these process conditions, the drying process is a stable process. As shown in Figure 4, a stable process is one at which the moisture content of the mixture fed to the dryer is such that the % of fan usage reaches a steady state over time. If the moisture content is too high, that is, above 15%, the particles in the mixture tend to agglomerate before they have a chance to dry. This agglomeration increases the particle size, which in turn requires more fan use to attempt to dry the feed material but the agglomeration means that the now agglomerated particles do not dry, and continue to increase in size as more feed material is fed to the dryer, increasing the fan use to 100% and clogging the dryer.

Further, utilising approximately 15% or lower MC in the mixture fed to the dryer means that the process is stable, but also that a useable amount of product can be removed (rather than used to mix with the fee material). In other words, the moisture content in the mixture fed to the dryer should be as high as possible, whilst remaining beneath the moisture content that enables a stable process in the dryer.

As used herein, ranges and amounts expressed are intended to be understood as "about" the particular value or range. About also includes the exact amount. For example, "5 mm" means "about 5 mm" and also "5 mm." Generally, the term "about" includes an amount that would be expected to be within experimental or controllable error. For moisture content, the measurement accuracy may be assumed to be within 1%-points (i.e. +/- 0.5 %-point).

The one or more embodiments are described above by way of example only. Many variations are possible without departing from the scope of protection afforded by the appended claims.

## Claims

1. A method of drying a feed material comprising starch using a fluidised bed dryer; the fluidised bed dryer having an operating temperature; and the starch having a glass transition temperature which is dependent on moisture content; the method comprising:
a. mixing the feed material with a dry material, having a lower moisture content than the feed material, to form a mixture having a moisture content; and
b. passing the mixture through the fluidised bed dryer
c. to produce a dried starch material
wherein the temperature of the mixture within the fluidised bed dryer remains less than the glass transition temperature of the starch throughout its passage through the dryer.

2. A method of drying a feed material comprising starch as claimed in claim 1 wherein the moisture content of the mixture is less than 15%.

3. A method of drying a feed material comprising starch as claimed in claim 1 or claim 2 wherein the moisture content of the mixture is 8-15%.

4. A method of drying a feed material comprising starch as claimed in any one of the preceding claims wherein the moisture content of the dry material is less than 10%.

5. A method of drying a feed material comprising starch as claimed in any one of the preceding claims wherein the feed material comprises food residue.

6. A method of drying a feed material comprising starch as claimed in claim 5 wherein the food residue comprises potato starch.

7. A method of drying a feed material comprising starch as claimed in claim 5 wherein the food residue comprises potato skins.

8. A method of drying a feed material comprising starch as claimed in any one of the preceding claims wherein the feed material comprises residue of uncooked food.

9. A method of drying a feed material comprising starch as claimed in any one of claims 1 to 7 wherein the feed material comprises residue of cooked food.

10. A method of drying a feed material comprising starch as claimed in any one of the preceding claims wherein the feed material has a moisture content of 82% or more.

11. A method of drying a feed material comprising starch as claimed in any one of the preceding claims wherein the operating temperature of the fluidised bed dryer is 100-200°C.

12. A method of drying a feed material comprising starch as claimed in any one of the preceding claims wherein the dry material is the dried starch material.

13. A method of drying a feed material comprising starch as claimed in any one of the preceding claims wherein the dry material and the feed material are mixed in a plough shear mixer.

14. A method of producing animal feed comprising drying a feed material comprising starch according to the method according to any one of the preceding claims.

15. A drying system to dry a feed material comprising starch, the system comprising:
a) a mixer to form a mixture from the feed material and a dry material having a lower moisture content than the feed material; and
b) a fluidised bed dryer for drying the mixture to form a dried product;
the drying system operable to carry out the method of any one of the preceding claims.
